# EUROPÄISCHE PATENTSCHRIFT

(11) **EP 2 196 409 B1**
(45) Veröffentlichungstag und Bekanntmachung des Hinweises auf die Patenterteilung: **25.05.2011**
(21) Anmeldenummer: 09012851.3
(22) Anmeldetag: 10.10.2009
(51) Int. Cl.: B65D 88/70, B65D 88/72, B60P 1/60, B60P 3/22

(54) **Behälter für rieselfähiges Schüttgut mit mindestens einem an dem Behälter befestigten Auslaufkonus**
Container for free flowing bulk goods with at least one outlet attached to the container
Récipient pour produits en vrac pouvant s'écouler doté d'au moins un cône de sortie fixé sur le récipient

(30) Priorität: 11.12.2008 DE 102008061689
(43) Veröffentlichungstag der Anmeldung: 16.06.2010
(73) Patentinhaber: Spitzer Silo-Fahrzeugwerke GmbH, 74834 Elztal-Dallau (DE)
(72) Erfinder: Spitzer, Udo, 74834 Elztal (DE)
(74) Vertreter: Wörz, Volker Alfred

(56) Entgegenhaltungen:
- EP-A1- 1 702 866
- DE-C- 964 940
- DE-U- 1 896 077

## Beschreibung

Die vorliegende Erfindung betrifft einen Behälter für rieselfähiges Schüttgut mit mindestens einem an dem Behälter befestigten Auslaufkonus und mit einer Vorrichtung zum Auflockern und Fließfähighalten von über den Auslaufkonus aus dem Behälter fließendem Schüttgut. Die Vorrichtung weist zum Auflockern und Fließfähighalten des Schüttguts einen am Übergang zwischen dem Auslaufkonus und dem restlichen Behälter ausgebildeten Zwischenflansch auf.

Derartige Behälter sind bspw. aus der DE 964 940 C bekannt. Die Behälter können beispielsweise als stationäre Silobehälter oder als Aufbauteil eines Fahrzeugs (Schienen- oder Kraftfahrzeug) ausgebildet sein. Die Behälter besitzen üblicherweise im unteren Bereich des Behälters einen oder mehrere Auslaufkonusse.

Bei Schüttgutbehältern, wie beispielsweise Silos mit einem im Bodenbereich angeordneten Auslaufkonus, wird das

Schüttgut im unteren Bereich durch die anstehende Füllhöhe stark zusammengedrückt, wodurch es zu einer Brückenausbildung im Schüttgut kommen kann. Das darüber liegende Schüttgut wird durch die Brückenausbildung gehalten, so dass beim Entleeren des Behälters ein weiteres Auslaufen des Schüttguts verhindert wird. Dies wird bei mobilen Behältern durch die während der Fahrt entstehenden Vibrationen noch verstärkt. Aus diesem Grund müssen besondere Vorkehrungen getroffen werden, um eine etwaige Brückenbildung von vornherein zu verhindern oder, falls diese durch entsprechend lange Lagerzeiten entstanden ist, wieder aufzubrechen. Deshalb haben Behälter häufig eine Vorrichtung zum Auflockern und Fließfähighalten von über den Auslaufkonus aus dem Behälter fließendem staubförmigem oder körnigem Schüttgut.

Zur Auflockerung des rieselfähigen Schüttgut im Bereich des Auslaufs sind verschiedene Vorrichtungen und Verfahren bekannt. Bei der sog. Membranauflockerung wird durch eine oder mehrere Öffnungen im Auslaufkonus Luft unter eine oder mehrere Membranen, die vorzugsweise aus Kunststoff bestehen, geblasen und dadurch ein Luftkissen um diese erzeugt. Zudem werden die Membranen zu Schwingungen angeregt, so dass das auslaufende Schüttgut aufgelockert wird.

Mit Hilfe einer im Auslaufkonus befestigte Gewebematte, die von hinten mit Luft beaufschlagt wird, kann auslaufendes Schüttgut ebenfalls aufgelockert werden. Eine solche Auflockerungsvorrichtung ist beispielsweise aus der DE 20 2005 002 563 U1 bekannt. Es entsteht eine Art Luftkissen, welches das Schüttgut fließfähig hält. Zudem beginnt die mit Luft hinterströmte Matte zu schwingen, wodurch das Schüttgut aufgelockert wird.

Bei der sog. Ringdüsenauflockerung wird im Auslaufkonus ein Innentrichter eingeschweißt oder eingelegt. Zwischen Auslauf und Innentrichter bleibt ein Spalt, durch den Luft strömt, welche das ausfließende Schüttgut auflockert. Eine solche Auflockerungsvorrichtung ist beispielsweise aus der DE 299 00 434 U1 bekannt.

Bei der sog. Auflockerung mit ringförmigem Einsatz wird in den Auslauftrichter ein von außerhalb des Auslauftrichters verstellbarer ringförmiger Einsatz eingesetzt. Durch einen Spalt zwischen Einsatz und Auslauf strömt Luft und lockert das Schüttgut auf. Eine solche Auflockerungsvorrichtung ist beispielsweise aus der DE 10 2005 039 313 B3 bekannt.

Allen bekannten Auslaufsystemen ist gemein, dass sie mindestens ein zusätzliches Bauteil aufweisen, das zwischen Auslauf und ausströmendem Schüttgut in den Auslaufkonus eingesetzt und dort montiert wird, um einen Luftkanal, einen Luftspalt und/oder ein Luftkissen zu bilden. Dieses zusätzliche Bauteil umfasst bei der Membranauflockerung eine oder mehrere Membrane, bei der Auflockerung mittels Gewebematte eine oder mehrere Gewebematten, bei der Ringdüsenauflockerung und der Auflockerung mit ringförmigem Einsatz einen Einsatz.

Ausgehend von dem beschriebenen Stand der Technik liegt der vorliegenden Erfindung die Aufgabe zugrunde, über einen Auslaufkonus aus einem Behälter fließendes Schüttgut mit möglichst geringem Aufwand, insbesondere mit möglichst wenigen zusätzlichen Bauteilen, aufzulockern und fließfähig zu halten.

Diese Aufgabe wird durch den Behälter mit den Merkmalen des Anspruchs 1 gelöst. Insbesondere wird vorgeschlagen, dass der Zwischenflansch der Vorrichtung zum Auflockern und Fließfähighalten des Schüttguts über seinen Umfang verteilt mehrere Luftdurchlässe aufweist, um Luft von außerhalb des Behälters in das Innere des Behälters zu blasen.

Zum Entleeren des Behälters ist dieser so ausgerichtet, dass der mindestens eine Auslaufkonus die tiefste Stelle des Behälters bildet. Der Auslaufkonus mündet in ein Absperrorgan, das in einen Anschlussstutzen für einen Förderschlauch übergeht. Der Behälter ist druckdicht ausgebildet, und das Innere des Behälters wird mit einem Überdruck beaufschlagt, so dass das darin enthaltene Schüttgut durch die Schwerkraft nach unten rieselt und aufgrund des Überdrucks über den Auslauftrichter, das Absperrorgan, den Anschlussstutzen und die Förderleitung aus dem Behälter gefördert wird.

Damit das Schüttgut im Auslauftrichter nicht klumpt und die Rieselfähigkeit erhalten bleibt, ist erfindungsgemäß der Zwischenflansch mit den Luftdurchlässen vorgesehen. Der Zwischenflansch ist als ein ringförmiges Element ausgebildet, dessen Durchmesser in etwa dem Durchmesser an dem Übergang zwischen dem Auslaufkonus und der angrenzenden Behälterwand entspricht. Durch die im Flansch ausgebildeten Luftdurchlässe wird Luft von außen in das Innere des Behälters geblasen. Entscheidend ist dabei, dass aufgrund der Anordnung des Zwischenflansches am Übergang zwischen dem Auslaufkonus und der Wand des restlichen Behälters die Luft gezielt in den Auslaufkonus geblasen wird. Die Ausrichtung der Luftdurchlässe ist derart, dass die austretende Luft schräg nach unten, in etwa in Richtung des Anschlussstutzens für den Förderschlauch gerichtet ist. Die gezielte und gerichtete Luftzufuhr über die Luftdurchlässe lockert das ausfließende Schüttgut auf, verhindert ein Klumpen des Schüttguts und hält das Schüttgut rieselfähig.

Gemäß einer vorteilhaften Weiterbildung der Erfindung wird vorgeschlagen, dass die Luftdurchlässe derart ausgerichtet sind, dass die durch sie geblasene Luft das ausfließende Schüttgut in Flussrichtung des ausfließenden Schüttguts, das heißt in Richtung Absperrorgan, beschleunigt. Dadurch kann das ausfließende Schüttgut besonders effizient und wirkungsvoll aufgelockert werden. Zudem unterstützt eine derart gerichtete Luftzufuhr das Ausfließen des Schüttguts über das Absperrorgan und den Förderschlauch.

Vorteilhafterweise ist der Verlauf der Luftdurchlässe im Wesentlichen radial nach innen gerichtet, wobei eine leichte Neigung der Luftdurchlässe nach unten in Richtung Absperrorgan denkbar ist. Vorzugsweise vergrößert sich die Querschnittsfläche der Luftdurchlässe von außen nach innen. Besonders bevorzugt ist, wenn die Luftdurchlässe eine längliche Luftaustrittsöffnung mit einer Längserstreckung in Umfangsrichtung des Zwischenflansches aufweisen.

Bereits ein Luftdurchlass kann eine ausreichende Auflockerung des auslaufenden Schüttguts bewirken. Um eine besonders gleichmäßige und wirkungsvolle Auflockerung des Schüttguts zu erreichen wird vorgeschlagen, dass über den Umfang des Zwischenflansches verteilt mehrere Luftdurchlässe verteilt ausgebildet bzw. angeordnet sind. Die Anzahl der Luftdurchlässe kann zwischen 2 und 30 variieren. Vorzugsweise sind mindestens sechs, besonders bevorzugt acht Luftdurchlässe über den Umfang verteilt ausgebildet sind. Die Luftdurchlässe sind vorzugsweise gleichmäßig über den Umfang des Zwischenflansches verteilt ausgebildet.

Um die Luftdurchlässe mit Luft zu versorgen, kann eine gemeinsame Ringleitung vorgesehen sein, die mindestens zwei der Luftdurchlässe mit Luft versorgt. Vorzugsweise ist eine gemeinsame Ringleitung vorgesehen, die alle Luftdurchlässe des zwischenflansches mit Luft versorgt. Selbstverständlich ist es auch denkbar, dass zumindest eine der Luftdurchlässe über eine eigene, separate Leitung mit Luft versorgt wird.

Bevorzugte Ausführungsformen der Erfindung werden anhand der beiliegenden Figuren und der nachfolgenden Figurenbeschreibung näher erläutert. Es zeigen:
- Fig. 1a: einen aus dem Stand der Technik bekannten liegenden Behälter für rieselfähiges Schüttgut,
- Fig. 1b: einen aus dem Stand der Technik bekannten kippbaren Behälter für rieselfähiges Schüttgut,
- Fig. 2: eine Auslaufvorrichtung mit einer Membranauflockerung eines aus dem Stand der Technik bekannten Behälters für rieselfähiges Schüttgut,
- Fig. 3: eine Auslaufvorrichtung mit einer Auflockerung mittels einer Gewebematte eines aus dem Stand der Technik bekannten Behälters für rieselfähiges Schüttgut,
- Fig. 4: eine Auslaufvorrichtung einer Ringdüsenauflockerung eines aus dem Stand der Technik bekannten Behälters für rieselfähiges Schüttgut mit,
- Fig. 5: eine Auslaufvorrichtung mit einer Auflockerung mittels ringförmigem Einsatz eines aus dem Stand der Technik bekannten Behälters für rieselfähiges Schüttgut,
- Fig. 6: eine Auslaufvorrichtung eines erfindungsgemäßen Behälters für rieselfähiges Schüttgut gemäß einer ersten bevorzugten Ausführungsform,

- Fig. 7: eine Auslaufvorrichtung eines erfindungsgemäßen Behälters für rieselfähiges Schüttgut gemäß einer zweiten bevorzugten Ausführungsform,
- Fig. 8: eine Auslaufvorrichtung eines erfindungsgemäßen Behälters für rieselfähiges Schüttgut gemäß einer dritten bevorzugten Ausführungsform.

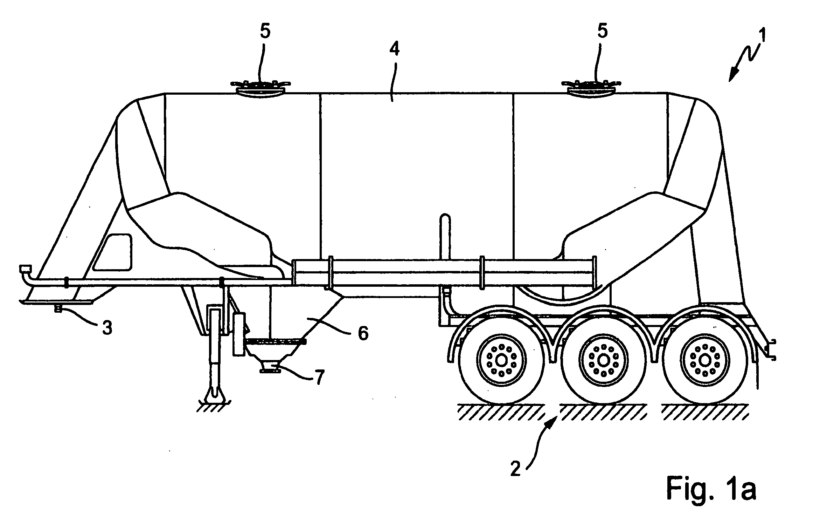

In Figur 1a ist ein an sich aus dem Stand der Technik bekannter auf einem Sattelauflieger montierter liegender Behälter in seiner Gesamtheit mit dem Bezugszeichen 1 bezeichnet. Der Sattelauflieger umfasst eine stabile Rahmenstruktur (nicht gezeigt), im hinteren Teil ein dreiachsiges Fahrgestell 2 und im vorderen Bereich ein Kupplungselement 3, über das der Auflieger an eine Zugmaschine angekuppelt werden kann. Der Behälter 1 weist im Wesentlichen die Form eines Hohlzylinder auf mit Wandungen 4 aus Kunststoff oder Metall (z.B. Stahl oder Aluminium). Auf der Oberseite des Behälters 1 sind mittels eines Deckels 5 druckdicht verschließbare Einfüllöffnungen angeordnet bzw. ausgebildet, über die der Behälter 1 mit körnigem oder pulverförmigem Schüttgut befüllt wird. Im unteren Bereich des Behälters 1 ist ein Auslauftrichter oder Auslaufkonus 6 vorgesehen. Selbstverständlich können auch mehrere Auslaufkonusse 6 an der Unterseite des Behälters 1 angeordnet sein. Der Auslaufkonus 6 mündet in ein Absperrorgan, das in einen Anschlussstutzen 7 für einen Förderschlauch (nicht dargestellt) übergeht. Der Behälter 1 ist druckdicht ausgebildet. Zum Entleeren des Behälters 1 wird dieser mit einem Überdruck beaufschlagt, so dass das darin enthaltene Schüttgut einerseits durch die Schwerkraft nach unten rieselt und aufgrund des Überdrucks über den Auslauftrichter 6, das Absperrorgan, den Anschlussstutzen 7 und die Förderleitung aus dem Behälter 1 gefördert wird.

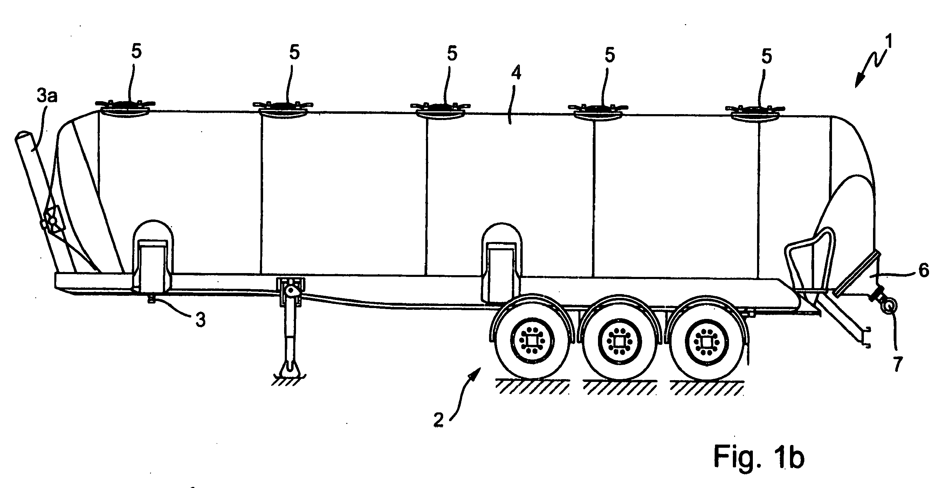

Der Behälter 1 kann statt auf einem Sattelauflieger auch auf einem herkömmlichen Lastkraftwagen (Lkw), einem Lkw-Anhänger oder sogar auf einem Zugwaggon montiert sein. Selbstverständlich kann der Behälter 1 auch als ein stationärer Silobehälter ausgebildet sein. Zudem ist es denkbar, dass der Auslauftrichter 6 nicht an der Unterseite des Behälters 6, sondern beispielsweise hinten an dem Behälter 1 angeordnet ist, wie dies beispielsweise in Figur 1b dargestellt ist. Zum Entleeren des Behälters 1 wird dieser mittels eines teleskopierbaren Hydraulikzylinders 3a nach hinten gekippt, so dass der Auslauftrichter 6 die tiefste Stelle des Behälters 1 bildet und das Schüttgut mittels Schwerkraft in Richtung des Auslaufs 6 fließt.

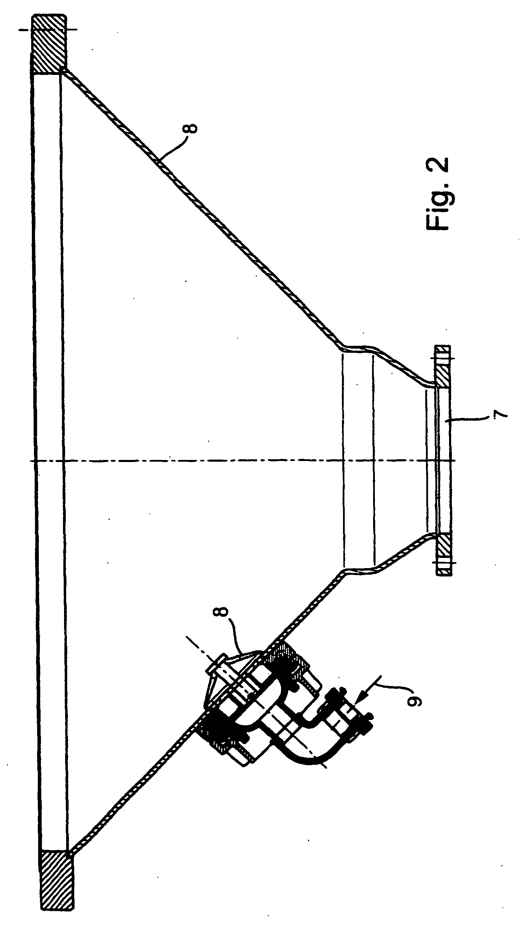

Um das Schüttgut im Bereich des Auslaufkonus 6 während des Entleerens des Behälters 1 ist im Auslaufkonus 6 eine Vorrichtung (vgl. Figuren 2 bis 5) zum Auflockern und Fließfähighalten des aus dem Behälter 1 fließenden Schüttguts vorgesehen. Im Stand der Technik gibt es verschiedene bekannte Ausgestaltungen dieser Vorrichtung, von denen nachfolgend einige vorgestellt werden.

Figur 2 zeigt einen mit einer sog. Membranauflockerung versehenen Auslaufkonus 6 eines bekannten Behälters 1. Dabei wird durch eine oder mehrere Öffnungen im Auslaufkonus 6 Luft unter eine oder mehrere Membranen 8, die vorzugsweise aus Kunststoff (Silikon) bestehen, geblasen und dadurch ein Luftkissen um die Membran erzeugt. Die Membran 8 wird von außerhalb des Auslaufkonus 6 mit Auflockerungsluft 9 beaufschlagt. Zudem wird die Membran 8 durch die zugeführte Luft in Schwingungen versetzt, so dass das auslaufende Schüttgut aufgelockert wird.

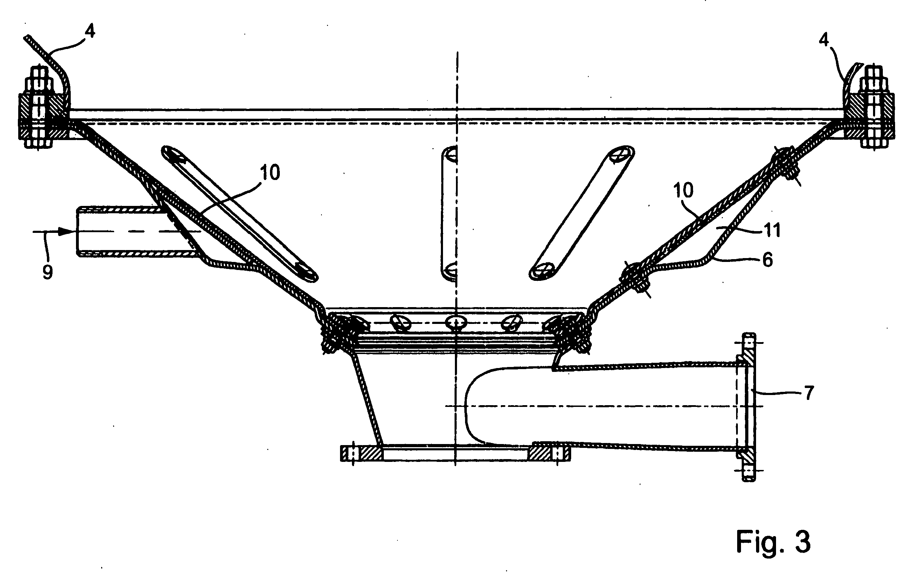

In Figur 3 ist ein Auslauftrichter 6 eines bekannten Behälters 1 dargestellt, bei dem das ausfließende Schüttgut mit Hilfe einer im Auslaufkonus 6 befestigten Gewebematte 10 aufgelockert wird. Die Auflockerungsluft 9 wird in einen Spalt 11 zwischen der Innenseite des Auslaufkonus 6 und der Rückseite der Gewebematte 10 gefördert, so dass die Matte 10 von hinten mit Luft beaufschlagt wird. Es entsteht eine Art Luftkissen, welches das Schüttgut fließfähig hält. Zudem beginnt die mit Luft hinterströmte Matte 10 zu schwingen, wodurch das Schüttgut aufgelockert wird.

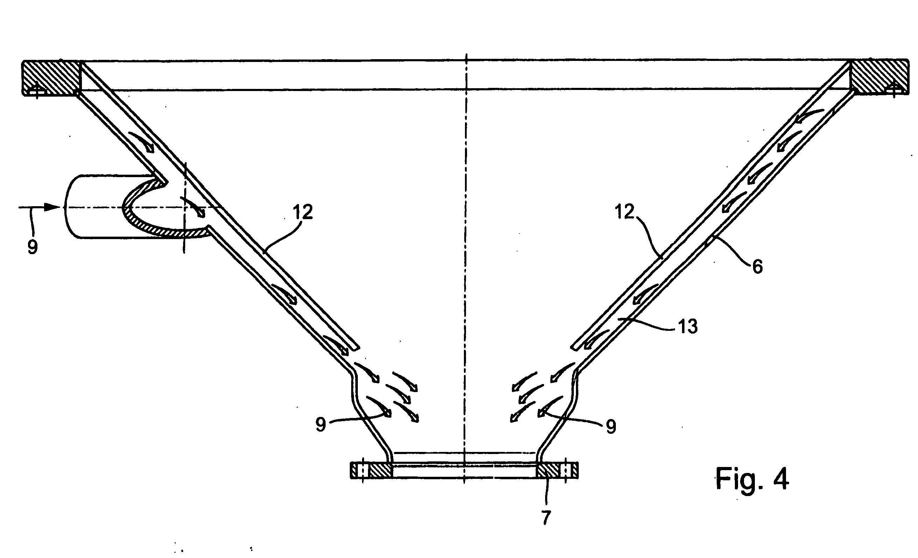

In Figur 4 ist ein Auslaufkonus 6 eines bekannten Behälters 1 gezeigt, bei dem ausfließendes Schüttgut mittels einer sog. Ringdüsenauflockerung aufgelockert wird. Dabei wird im Auslaufkonus 6 ein Innentrichter 12 eingeschweißt oder eingelegt. Zwischen Auslauf 6 und Innentrichter 12 bleibt ein Spalt 13, durch den Auflockerungsluft 9 strömt, welche das ausfließende Schüttgut auflockert.

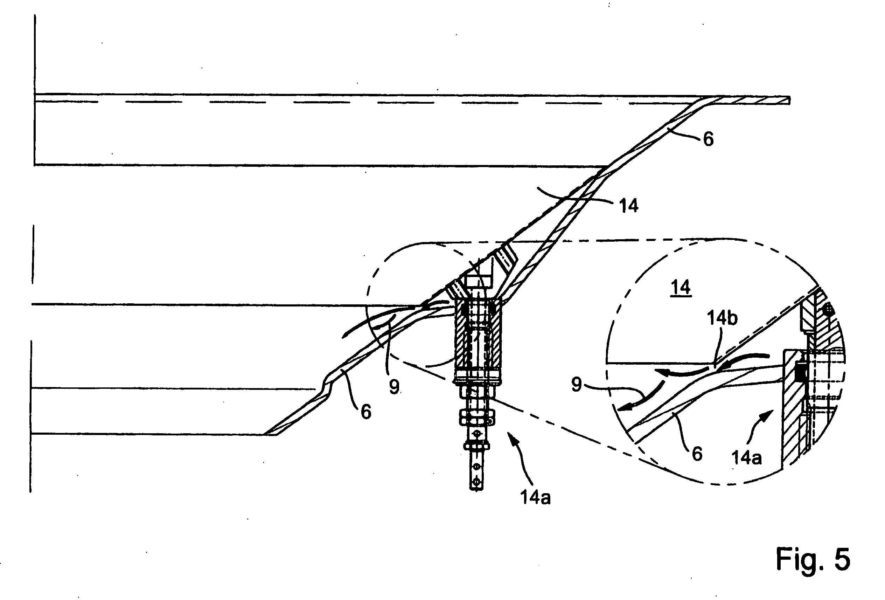

Schließlich ist in Figur 5 ein Auslauftrichter 6 dargestellt, bei dem eine sog. Auflockerung mit ringförmigem Einsatz Verwendung findet. Dabei wird in den Auslauftrichter 6 ein von außerhalb des Auslauftrichters 6 verstellbarer ringförmiger Einsatz 14 eingesetzt. Die Verstellvorrichtung zum Verstellen des Einsatzes 14 ist mit dem Bezugszeichen 14a bezeichnet. Durch einen Spalt 14b zwischen Einsatz 14 und Auslauf 6 strömt Luft und lockert das ausfließende Schüttgut auf.

Allen bekannten Auslaufsystemen ist gemein, dass sie mindestens ein zusätzliches Bauteil aufweisen, das zwischen Auslauf 6 und ausströmendem Schüttgut in den Auslaufkonus 6 eingesetzt und dort montiert werden muss, um einen Luftkanal, einen Luftspalt und/oder ein Luftkissen zu bilden. Dieses zusätzliche Bauteil umfasst bei der Membranauflockerung eine oder mehrere Membrane 8, bei der Auflockerung mittels Gewebematte eine oder mehrere Gewebematten 10, bei der Ringdüsenauflockerung und der Auflockerung mit ringförmigem Einsatz einen Einsatz 12, 14. Dies macht den Auslaufkonus 6 relativ aufwendig und teuer in der Herstellung und Montage. Zudem wird durch das mindestens eine in den Auslauftrichter 6 einzusetzende Bauteil die Reinigung des Auslaufkonus 6 erschwert, was besonders bei Schüttgut aus der Lebensmittel- und/oder Chemieindustrie von Nachteil ist.

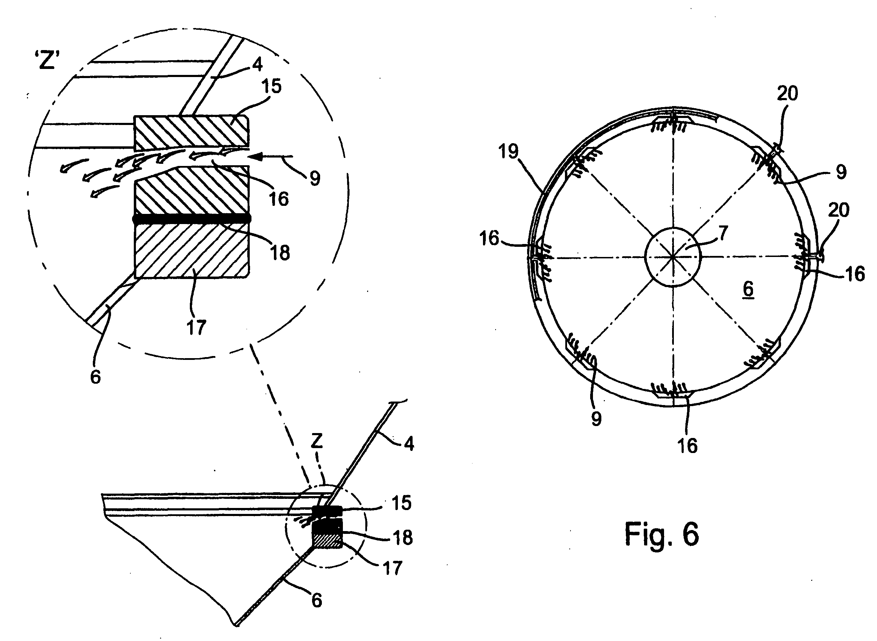

In Figur 6 ist ein Auslaufkonus 6 eines erfindungsgemäßen Behälters 1 dargestellt. Dieser ermöglicht es, das über den Auslaufkonus 6 aus einem Behälter 1 fließende Schüttgut mit besonders geringem Aufwand, insbesondere mit möglichst wenigen zusätzlichen Bauteilen, aufzulockern und fließfähig zu halten.

Bei dem erfindungsgemäßen Behälter 1 ist am Übergang zwischen dem Auslaufkonus 6 und der wandung 4 des restlichen Behälters 1 ein Zwischenflansch 15 ausgebildet, der über seinen Umfang verteilt mehrere Luftdurchlässe 16 aufweist, um Luft von außerhalb des Behälters 1 in das Innere des Behälters zu blasen. Unter Umständen kann bereits ein einziger Luftdurchlass 16 ausreichen, um das ausfließende Schüttgut in ausreichendem Maße fließfähig zu halten, insbesondere dann, wenn der Luftdurchlass 16 in besonderer Weise (z.B. besonders lang) ausgestaltet und/oder angeordnet ist. Bei dem in Figur 6 gezeigten Ausführungsbeispiel ist der Zwischenflansch 15 integraler Bestandteil eines Flansches des Behälters 1. Ein Flansch des Auslauftrichters 6 ist mit dem Bezugszeichen 17 bezeichnet. Zwischen dem Zwischenflansch 15, der dem Behälterflansch entspricht, und dem Auslaufflansch 17 ist eine Auslaufdichtung 18 angeordnet.

Um die Auflockerungsvorrichtung des erfindungsgemäßen Behälters 1 realisieren zu können, wird einfach der Behälterflansch als Zwischenflansch 15 mit darin ausgebildeten Luftdurchlässen 16 ausgebildet, so dass die Auflockerungsvorrichtung gewissermaßen in den Behälter 1 integriert ist. Der Auslauftrichter 6 wird mit seinem Flansch 17 an dem Zwischenflansch 15 befestigt. Dies kann beispielsweise mittels Schweißen oder durch Schrauben erfolgen. Zur Realisierung der Auflockerungsvorrichtung muss kein zusätzliches Bauteil in den Auslaufkonus 6 eingesetzt und darin befestigt werden.

Mehrere oder alle Luftdurchlässe 16 werden über eine außen um den Zwischenflansch 15 verlaufende Ringleitung 19 mit Auflockerungsluft 9 versorgt. Es ist denkbar dass einzelne Luftdurchlässe 16 nicht an die Ringleitung 19 angeschlossen sind, sondern einzeln separat mit Auflockerungsluft 9 versorgt werden. Zum Anschluss der Ringleitung 19 bzw. der Einzel-Ansteuerung 20 können die Luftdurchlässe 16 an der Außenseite entsprechende Anschlusselemente aufweisen. Es ist klar, dass alle Luftdurchlässe 16 entweder über eine Gemeinschaftsleitung 19 oder über eine Einzelleitung 20 mit Auflockerungsluft 9 versorgt werden, selbst wenn dies in den Figuren der besseren Übersichtlichkeit der Zeichnungen wegen nicht für alle Luftdurchlässe 16 dargestellt ist.

Über den Umfang des Auslauftrichters 6 können etwa 1 bis 30 Luftdurchlässe 16 angeordnet sein. Diese weisen vorzugsweise in Umfangsrichtung eine größere Erstreckung auf als in der Höhe. Die Luftdurchlässe 16 sind also schlitzförmig ausgebildet. Die Längserstreckung der schlitzförmigen Luftdurchlässe 16 verläuft vorzugsweise in Umfangsrichtung. Selbstverständlich ist es aber auch denkbar, dass die Längserstreckung der Luftdurchlässe 16 schräg zur Umfangsrichtung verläuft. Die Querschnittsfläche der Luftdurchlässe 16 nimmt vorzugsweise von außen nach innen zu.

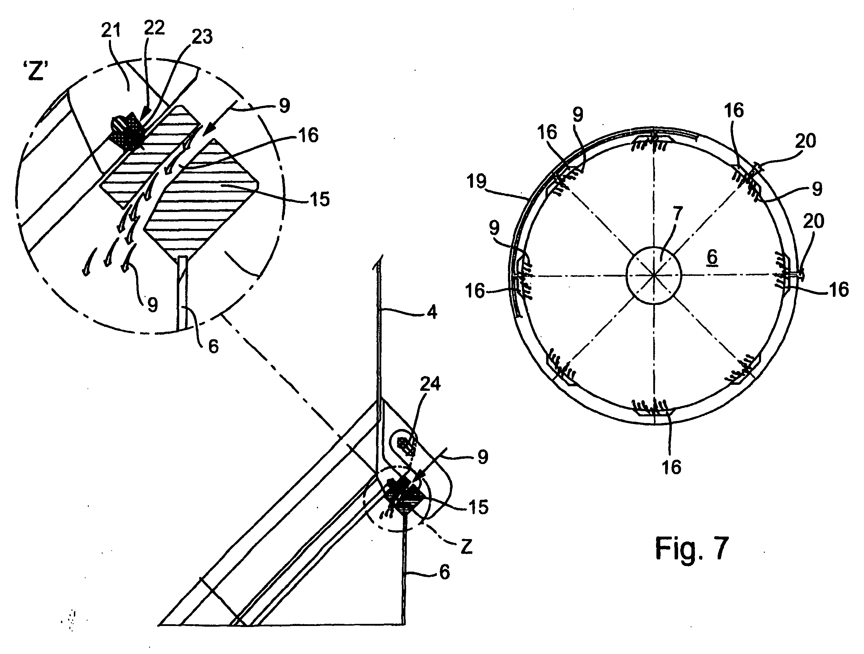

In Figur 7 ist ein weiteres Ausführungsbeispiel eines erfindungsgemäßen Behälters 1 dargestellt, bei dem der Zwischenflansch 15 im Unterschied zur Ausführungsform aus Figur 6 in den Auslaufflansch integriert ist. Der Behälterflansch ist mit dem Bezugszeichen 21 bezeichnet. In dem Behälterflansch 21 ist in der zum Zwischenflansch 15 gerichteten Stirnfläche eine Ringnut 22 ausgebildet, in der eine ringförmige Dichtung 23 angeordnet ist.

Es ist zu erkennen, dass der Auslauf 6 über ein Scharnier 24 am restlichen Behälter 1 befestigt ist. Über den Umfang verteilt sind Schrauben (nicht dargestellt) vorgesehen, mit denen der Auslauftrichter 6 an dem Behälterflansch 22 befestigt ist. Nach dem Lösen der Schrauben kann der Auslauf 6 beispielsweise zu Reinigungszwecken vom Behälter 1 gelöst und um das Scharnier 24 verschwenkt werden.

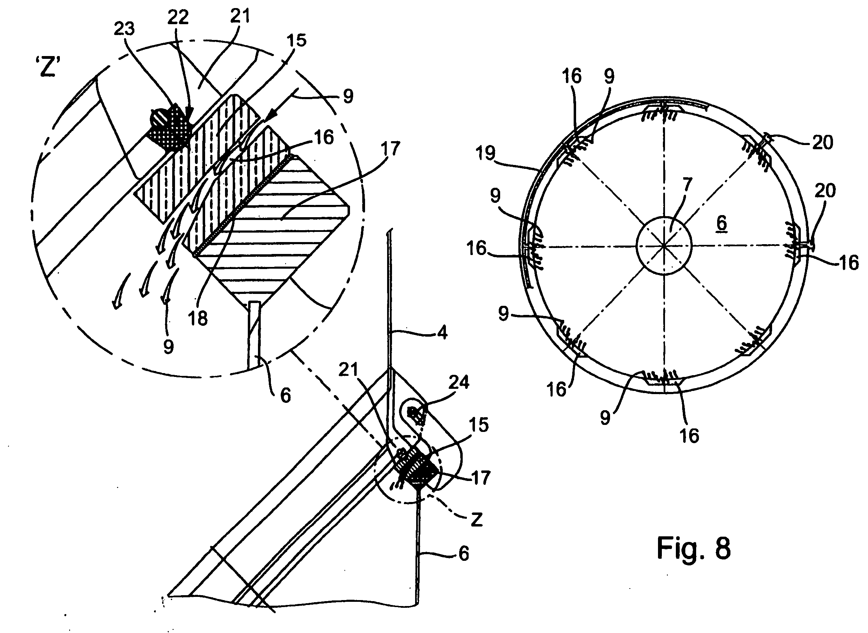

In Figur 8 ist ein drittes Ausführungsbeispiel des erfindungsgemäßen Behälters 1 dargestellt. Im Unterschied zu den vorangegangenen Ausführungsbeispielen ist der Zwischenflansch 15 als ein separater Flansch ausgebildet, der zwischen dem Behälterflansch 21 und dem Auslaufflansch 17 angeordnet ist. Obwohl der Zwischenflansch 15 bei dieser Ausführungsform als ein separates Bauteil ausgebildet ist, ergibt sich eine deutliche Vereinfachung und Kosteneinsparung gegenüber den aus dem Stand der Technik bekannten Auflockerungsvorrichtungen. Dies ergibt sich insbesondere dadurch, dass der Zwischenflansch 15 im Rahmen der Herstellung und Montage lediglich zwischen dem Behälterflansch 21 und dem Auslaufflansch 17 angeordnet und nicht in den Auslauftrichter 6 eingesetzt und darin befestigt werden muss.

Bei der vorliegenden Erfindung erfolgt also eine Auflockerung des ausfließenden Schüttguts dadurch, dass über die Auflockerungsschlitze 16 über den gesamten Umfang des Auslauftrichters 6 verteilt Auflockerungsluft 9 in das Innere des Auslauftrichters 6 geblasen wird. Während im Stand der Technik das ausfließende Schüttgut zur Auflockerung über zusätzlich in den Auslauf 6 eingebrachte Bauteile in Vibrationen und Schwingungen versetzt wird, wird es bei der Erfindung durch die über die Auflockerungsschlitze 16 düsenartig eingeblasene Luft aufgelockert. Die Schlitze 16 arbeiten sozusagen als Luftdüsen.

Es ist denkbar, dass die Auflockerungsvorrichtung mit Zwischenflansch 15 des erfindungsgemäßen Behälters 1 mit einer anderen an sich aus dem Stand der Technik bekannten Auflockerungsvorrichtung kombiniert wird. Der Vorteil besteht darin, dass eine optimale Auflockerung des ausfließenden Schüttguts erreicht werden kann, da bei Varianten auf unterschiedlichen Prinzipien (Vibrationen und Schwingungen im Stand der Technik und Luftdüsen bei der Erfindung) zur Auflockerung des Schüttguts beruhen.

## Patentansprüche

1. Behälter (1) für rieselfähiges Schüttgut mit mindestens einem an dem Behälter (1) befestigten Auslaufkonus (6) mit einer Vorrichtung zum Auflockern und Fließfähighalten von über den Auslaufkonus (6) aus dem Behälter (1) fließendem Schüttgut, wobei die Vorrichtung zum Auflockern und Fließfähighalten des Schüttguts einen am Übergang zwischen dem Auslaufkonus (6) und dem restlichen Behälter (1) ausgebildeten Zwischenflansch (15) aufweist, **dadurch gekennzeichnet, dass** der Zwischenflansch (15) über seinen Umfang verteilt mehrere Luftdurchlässe aufweist, um Luft (9) von außerhalb des Behälters (1) in das Innere des Behälters (1) zu blasen.

2. Behälter (1) nach Anspruch 1, **dadurch gekennzeichnet, dass** die Luftdurchlässe (16) derart ausgerichtet sind, dass die durch sie geblasene Luft (9) das ausfließende Schüttgut in Flussrichtung des ausfließenden Schüttguts beschleunigt.

3. Behälter (1) nach Anspruch 1 oder 2, **dadurch gekennzeichnet, dass** der Verlauf der Luftdurchlässe (16) radial nach innen gerichtet ist.

4. Behälter (1) nach einem der Ansprüche 1 bis 3, **dadurch gekennzeichnet, dass** über den Umfang des Zwischenflansches (15) verteilt zwischen 1 und 30 Luftdurchlässe (16), vorzugsweise acht Luftdurchlässe (16) ausgebildet sind.

5. Behälter (1) nach einem der Ansprüche 1 bis 4, **dadurch gekennzeichnet, dass** die Luftdurchlässe (16) gleichmäßig über den Umfang des Zwischenflansches (15) verteilt ausgebildet sind.

6. Behälter (1) nach einem der Ansprüche 1 bis 5, **dadurch gekennzeichnet, dass** die Luftdurchlässe (16) eine längliche Luftaustrittsöffnung mit einer Längserstreckung in Umfangsrichtung des Zwischenflansches (15) aufweisen.

7. Behälter (1) nach einem der Ansprüche 1 bis 6, **dadurch gekennzeichnet, dass** der Zwischenflansch (15) als integrales Teil des Behälters (1), insbesondere eines Behälterflansches (21), ausgebildet ist.

8. Behälter (1) nach einem der Ansprüche 1 bis 6, **dadurch gekennzeichnet, dass** der Zwischenflansch (15) als integrales Teil des Auslaufkonus (6), insbesondere eines Auslaufflansches (17), ausgebildet ist.

9. Behälter (1) nach einem der Ansprüche 1 bis 8, **dadurch gekennzeichnet, dass** zumindest einem der Luftdurchlässe (16) eine eigene Leitung (20) zum Zuführen von Luft zugeordnet ist.

10. Behälter (1) nach einem der Ansprüche 1 bis 8, **dadurch gekennzeichnet, dass** eine gemeinsame Ringleitung (19) vorgesehen ist, die mindestens zwei der Luftdurchlässe (16) mit Luft versorgt.

11. Behälter (1) nach einem der Ansprüche 1 bis 10, **dadurch gekennzeichnet, dass** der Behälter (1) eine im wesentlichen hohlzylindrische Form aufweist und in Längsrichtung auf einem Kraftfahrzeug, einem Kraftfahrzeug- oder einem Schienenfahrzeuganhänger angeordnet ist, wobei der mindestens eine Auslaufkonus (6) an der Unterseite des auf dem Kraftfahrzeug, dem Kraftfahrzeug- oder dem Schienenfahrzeuganhänger angeordneten Behälters (1) angeordnet ist.

12. Behälter (1) nach einem der Ansprüche 1 bis 10, **dadurch gekennzeichnet, dass** der Behälter (1) eine im wesentlichen hohlzylindrische Form aufweist und in Längsrichtung auf einem Kraftfahrzeug, einem Kraftfahrzeug- oder einem Schienenfahrzeuganhänger angeordnet ist, wobei der mindestens eine Auslaufkonus (6) an einer Stirnseite des auf dem Kraftfahrzeug, dem Kraftfahrzeug- oder dem Schienenfahrzeuganhänger angeordneten Behälters (1) befestigt ist, wobei der Behälter (1) zum Entleeren derart angehoben wird, dass der Auslaufkonus (6) im tiefsten Punkt des Behälters (1) angeordnet ist.

13. Behälter (1) nach einem der Ansprüche 1 bis 12, **dadurch gekennzeichnet, dass** an der Innenseite des Auslaufkonus (6) eine weitere Vorrichtung zum Auflockern und Fließfähighalten des ausfließenden Schüttguts angeordnet ist.

14. Behälter (1) nach Anspruch 13, **dadurch gekennzeichnet, dass** die weitere Vorrichtung zum Auflockern und Fließfähighalten des ausfließenden Schüttguts mindestens eine Membran (8), eine Gewebematte (10) oder einen ringförmigen Einsatz (12, 14) aufweist, die bzw. der an der Innenseite des Auslaufkonus (6) angeordnet ist, wobei zwischen Auslaufkonus (6) und der Membran (8), der Gewebematte (10) oder dem ringförmigen Einsatz (12, 14) Luft geblasen wird.

15. Behälter (1) nach einem der Ansprüche 1 bis 14, **dadurch gekennzeichnet, dass** der Zwischenflansch (15) aus Kunststoff oder Metall, insbesondere aus einem nicht-rostenden Stahl oder Aluminium, besteht.

## Claims

1. A container (1) for free-flowing bulk goods having at least one conical outlet (6) that is attached to the container (1) and that has a device for loosening up and maintaining the flowability of the bulk goods that flow out of the container (1) through the conical outlet (6), whereby the device for loosening up and maintaining the flowability of the bulk goods has an intermediate flange (15) that is configured on the transition between the conical outlet (6) and the rest of the container (1), wherein the intermediate flange (15) has multiple air passages that are distributed over its circumference so that air (9) may be blown from outside the container (1) into the interior of the container (1).

2. The container (1) as recited in Claim 1, wherein the air passages (16) are positioned in such a way that the air (9) that is blown through them increases the speed of the outflowing bulk goods in their flow direction.

3. The container (1) as recited in Claim 1 or 2, wherein the slant of the air passages (16) is directed radially towards the interior.

4. The container (1) as recited in any of Claims 1 to 3, wherein between 1 and 30 air passages (16), and preferably eight air passages (16), are configured so that they are distributed over the circumference of the intermediate flange (15).

5. The container (1) as recited in any of Claims 1 to 4, wherein the air passages (16) are configured so as to be uniformly distributed over the circumference of the intermediate flange (15).

6. The container (1) as recited in any of Claims 1 to 5, wherein the air passages (16) have a longitudinal air discharge opening that has a longitudinal extension in the circumferential direction of the intermediate flange (15).

7. The container (1) as recited in any of Claims 1 to 6, wherein the intermediate flange (15) is configured as an integral part of the container (1), specifically of a container flange (21).

8. The container (1) as recited in any of Claims 1 to 6, wherein the intermediate flange (15) is configured as an integral part of the conical outlet (6), in particular of an outlet flange (17).

9. The container (1) as recited in any of Claims 1 to 8, wherein at least one of the air passages (16) has assigned to it its own line (20) for supplying air.

10. The container (1) as recited in any of Claims 1 to 8, wherein a common annular line (19) is provided that supplies air to at least two of the air passages (16).

11. The container (1) as recited in any of Claims 1 to 10, wherein the container (1) has an essentially hollow cylindrical shape and is arranged in the longitudinal direction on a motor vehicle or on a trailer of a motor vehicle or rail vehicle, whereby the at least one conical outlet (6) is arranged on the bottom of the container (1), which is arranged on the motor vehicle or on the trailer of a motor vehicle or rail vehicle.

12. The container (1) as recited in any of Claims 1 to 10, wherein the container (1) has an essentially hollow cylindrical shape and is arranged in the longitudinal direction on a motor vehicle or on a trailer of a motor vehicle or rail vehicle, whereby the at least one conical outlet (6) is attached to the end of the container (1), which is arranged on the motor vehicle or on the trailer of a motor vehicle or rail vehicle, whereby in order to be emptied the container (1) is raised in such a way that the conical outlet (6) is located at the lowest point of the container (1).

13. The container (1) as recited in any of Claims 1 to 12, wherein a further device is arranged on the interior side of the conical outlet (6) for loosening up and maintaining the flowability of the outflowing bulk goods.

14. The container (1) as recited in Claim 13, wherein the further device for loosening up and maintaining the flowability of the outflowing bulk goods has at least one diaphragm (8), one web mat (10), or one annular insert (12, 14), which is arranged on the interior side of the conical outlet (6), whereby air is blown between the conical outlet (6) and the diaphragm (8), the woven mat (10), or the annular insert (12, 14).

15. The container (1) as recited in any of Claims 1 to 14, wherein the intermediate flange (15) is made of plastic or metal, in particular stainless steel or aluminum.

## Revendications

1. Citerne (1) recevant des produits en vrac susceptibles de couler ayant au moins un cône de sortie (6) fixé à la citerne (1) et un dispositif pour ameublir et maintenir à l'état fluide, le produit en vrac qui s'écoule de la citerne (1) à travers le cône de sortie (6),
- le dispositif d'ameublissement et de maintien à l'état fluide du produit en vrac comporte une bride intermédiaire (15) réalisée à la jonction entre le cône de sortie (6) et le restant de la citerne (1),
citerne **caractérisée en ce que**
la bride intermédiaire (15) comporte plusieurs passages d'air répartis à sa périphérie pour insuffler de l'air (9) de l'extérieur de la citerne (1) à l'intérieur de celle-ci.

2. Citerne (1) selon la revendication 1,
**caractérisée en ce que**
les passages d'air (16) sont alignés de sorte que l'air soufflé (9) accélère le produit en vrac qui s'écoule dans le sens de l'écoulement de sortie du produit en vrac.

3. Citerne (1) selon la revendication 1 ou 2,
**caractérisée en ce que**
le tracé des passages d'air (16) est dirigé radialement vers l'intérieur.

4. Citerne (1) selon l'une des revendications 1 à 3,
**caractérisée par**
entre 1 et 30 passages d'air (16) de préférence huit passages d'air (16) répartis à la périphérie de la bride intermédiaire (15).

5. Citerne (1) selon l'une des revendications 1 à 4,
**caractérisée en ce que**
les passages d'air (16) sont répartis régulièrement à la périphérie de la bride intermédiaire (15).

6. Citerne (1) selon l'une des revendications 1 à 5,
**caractérisée en ce que**
les passages d'air (16) comportent un orifice de sortie d'air, allongé dont l'extension longitudinale est dans la direction périphérique de la bride intermédiaire (15).

7. Citerne (1) selon l'une des revendications 1 à 6,
**caractérisée en ce que**
la bride intermédiaire (15) fait corps avec la citerne (1) et elle est notamment réalisée sous la forme d'une bride (21) de la citerne.

8. Citerne (1) selon l'une des revendications 1 à 6,
**caractérisée en ce que**
la bride intermédiaire (15) fait partie du cône de sortie (6) et elle est notamment réalisée comme bride de sortie (17).

9. Citerne (1) selon l'une des revendications 1 à 8,
**caractérisée en ce qu'**
au moins l'un des passages d'air (16) comporte sa propre conduite (20) d'alimentation en air.

10. Citerne (1) selon l'une des revendications 1 à 8,
**caractérisée par**
une conduite annulaire commune (19) qui assure au moins l'alimentation en air de deux passages d'air (16).

11. Citerne (1) selon l'une des revendications 1 à 10,
**caractérisée en ce que**
la citerne (1) a une forme essentiellement cylindrique creuse et elle est installée dans la direction longitudinale sur un véhicule automobile, une remorque de véhicule automobile ou un wagon, et au moins un cône de sortie (6) est prévu sur le côté inférieur de la citerne (1) installée que le véhicule automobile, la remorque de véhicule automobile ou wagon.

12. Citerne (1) selon l'une des revendications 1 à 10,
**caractérisée en ce que**
la citerne (1) a une forme essentiellement cylindrique creuse et elle est installée dans la direction longitudinale sur un véhicule automobile, une remorque de véhicule automobile ou un wagon, et
au moins un cône de sortie (6) est fixé contre le côté inférieur de la citerne (1) installée sur le véhicule automobile, la remorque de véhicule automobile ou le wagon,
la citerne (1) étant relevée pour être vidée de façon que le cône de sortie (6) se trouve au point le plus bas de la citerne (1).

13. Citerne (1) selon l'une des revendications 1 à 12,
**caractérisée en ce que**
le côté intérieur du cône de sortie (6) comporte un autre dispositif pour ameublir et tenir à l'état fluide le produit sortant en vrac.

14. Citerne (1) selon la revendication 13,
**caractérisée en ce que**
l'autre dispositif pour ameublir et tenir à l'état fluide le produit sortant en vrac, comporte au moins une membrane (8), une nappe de tissé (10) ou un insert annulaire (12, 14) prévu sur ou dans le côté intérieur du cône de sortie (6),
et entre le cône de sortie (6) et la membrane (8), la nappe de tissé (10) ou l'insert annulaire (12, 14) on souffle de l'air.

15. Citerne (1) selon l'une des revendications 1 à 14,
**caractérisée en ce que**
la bride intermédiaire (15) est en matière plastique ou en métal, notamment en un acier inoxydable ou en aluminium.
